# FASCICULE DE BREVET EUROPEEN

(11) **EP 1 046 552 B1**
(45) Date de publication et mention de la délivrance du brevet: **19.05.2004**
(21) Numéro de dépôt: 00400866.0
(22) Date de dépôt: 29.03.2000
(51) Int. Cl.: B60R 21/26

(54) **Ensemble de protection muni d'un déflecteur externe expansible**
Schutzeinheit mit einem äusseren, expandierbaren Deflektor
Protection unit provided with an external expansible deflector

(30) Priorité: 20.04.1999 FR 9904971
(43) Date de publication de la demande: 25.10.2000
(73) Titulaire: Livbag S.N.C., 75017 Paris (FR)
(72) Inventeur: Suzanne, Philippe, 60380 Bouicourt (FR); Morfouace, Vincent, 77000 Melun (FR)
(74) Mandataire: Le Faou, Daniel

(56) Documents cités:
- DE-A- 19 626 463
- GB-A- 2 320 470
- US-A- 4 178 017
- US-A- 5 149 130
- "DEFORMABLE DIFFUSER FOR AN AIR BAG MODULE" RESEARCH DISCLOSURE,GB,INDUSTRIAL OPPORTUNITIES LTD. HAVANT, no. 391, 1 novembre 1996 (1996-11-01), pages 687-688, XP000680900 ISSN: 0374-4353
- PATENT ABSTRACTS OF JAPAN vol. 1997, no. 07, 31 juillet 1997 (1997-07-31) & JP 09 086333 A (TOYO TIRE &RUBBER CO LTD), 31 mars 1997 (1997-03-31)

## Description

La présente invention se rapporte au domaine de la sécurité automobile et concerne plus particulièrement un ensemble de protection comprenant un module contenant lui-même un générateur de gaz, un déflecteur externe et un coussin de protection.

Le document US-A-4 178 017 décrit un ensemble de protection selon le préambule de la revendication 1.

Afin de limiter au maximum le risque d'accidents corporels couru par les occupants d'un véhicule automobile lors d'un choc frontal ou latéral, il a été proposé depuis une trentaine d'années d'incorporer des systèmes générateurs de gaz dans les véhicules automobiles permettant de gonfler des coussins de protection frontaux ou latéraux. Mais ces générateurs, qui sont de plus en plus performants tout en conservant un encombrement externe réduit, émettent généralement des jets de gaz insuffisamment filtrés qui vont directement au contact du coussin de protection et qui transportent des particules très chaudes pouvant altérer le coussin de protection.

Il a alors été proposé d'associer des déflecteurs externes à ces différents générateurs de gaz de manière à dévier la trajectoire des jets de gaz et donc à diminuer l'agressivité de ces derniers à l'encontre des coussins de protection. Le brevet US 3,618,976 décrit un générateur de gaz cylindrique plus spécialement utilisé pour gonfler un coussin de protection destiné à protéger le conducteur d'un véhicule automobile et qui comporte un orifice central d'évacuation des gaz provenant de la combustion d'un chargement pyrotechnique, cet orifice central situé sur une face plane du générateur étant de forme rectangulaire et étant surmonté par un déflecteur indéformable lui-même porté par un filtre expansible également de forme rectangulaire qui est riveté et initialement plié autour dudit orifice central. Un coussin de protection est positionné sur le générateur et contient le déflecteur indéformable. Mais ce dernier, outre le fait qu'il induit un coût de réalisation relativement élevé et un encombrement externe trop important, ne peut être employé qu'avec un générateur de gaz d'un certain type tel que décrit dans ledit brevet et ne peut donc pas être associé à un générateur de forme tubulaire muni d'orifices d'évacuation des gaz périphériques. Le brevet US 5,340,147 divulgue un ensemble de protection contenant un générateur de gaz de forme générale tubulaire possédant des sorties de gaz réparties sur toute la longueur de la paroi cylindrique du générateur et autour duquel est fixé un déflecteur externe indéformable, ce dernier étant lui-même contenu dans un diffuseur en partie expansible et de forme générale tubulaire. Cet ensemble de protection est réalisé à l'aide de nombreuses pièces mécaniques difficiles à usiner conférant à ce dernier un coût de fabrication élevé ainsi qu'une masse et un encombrement externe importants, ce qui est très préjudiciable dans un marché concurrentiel comme celui de la sécurité automobile. La demande brevet européen EP 0 844 149 décrit un ensemble de protection comprenant un générateur de gaz cylindrique de faible hauteur par rapport au diamètre et plus spécialement utilisé pour gonfler un coussin de protection destiné à protéger le conducteur d'un véhicule automobile. Un déflecteur externe indéformable est placé autour du générateur et permet de dévier les jets de gaz chauds.

Aujourd'hui, le besoin en générateurs tubulaires de grande longueur par rapport au diamètre croît régulièrement en raison de la multiplication des protections pour les passagers, ces protections faisant exclusivement appel à ce type de générateur. Or, l'homme du métier ne dispose pas, pour ce type de générateur, de déflecteur externe de dimensions réduites et de fabrication peu onéreuse.

Un premier objet de l'invention est de réaliser un ensemble de protection contenant un générateur de gaz de forme générale tubulaire auquel est associé un déflecteur externe dont l'encombrement externe est réduit.

Un autre objet de l'invention est de réaliser un ensemble de protection de ce type présentant de faibles coûts de fabrication.

L'objet de l'invention est un ensemble de protection d'un occupant d'un véhicule automobile selon la revendication 1.

Préférentiellement, le déflecteur externe expansible est réalisé à l'aide d'une bande métallique déformable ayant une longueur dont la valeur est comprise entre 1,5L et 2,5L. Préférentiellement encore, la bande possède une épaisseur comprise entre 0,1mm et 0,5mm.

Avantageusement, la bande déformable comporte au moins une zone d'expansion destinée à être déployée sous l'action des gaz libérés par le générateur. Cette zone d'expansion peut être réalisée par pliage de la bande ou encore par enroulement de la bande sur elle-même.

Selon une première variante préférée de réalisation du déflecteur externe expansible, la zone d'expansion est obtenue par pliage de la bande selon au moins quatre plis symétriques, chaque pli étant réalisé selon un angle de 180° et avec un rayon minimal de 0,2mm.

Selon une seconde variante préférée de réalisation du déflecteur externe expansible, la zone d'expansion est obtenue par pliage de la bande selon au moins deux plis asymétriques, chaque pli étant réalisé selon un angle de 180° et avec un rayon minimal de 0,2mm.

Un ensemble de protection tel que décrit ci-dessus apporte donc bien une solution aux problèmes posés précédemment puisque :
- l'utilisation d'un déflecteur externe expansible qui enserre initialement la paroi latérale du générateur permet de conférer au sous-ensemble constitué par ledit générateur et ledit déflecteur un encombrement externe pratiquement similaire à celui présenté par le générateur,
- l'emploi d'une simple bande métallique de masse négligeable pour réaliser le déflecteur externe expansible permet de réduire grandement les coûts de fabrication et d'assemblage.

De façon avantageuse, la bande est revêtue d'une protection contre la corrosion.

Avantageusement encore, les orifices d'évacuation sont situés dans une zone équidistante des extrémités du corps du générateur. De manière à réduire le nombre d'étapes nécessaires à l'assemblage de l'ensemble de protection, le générateur de gaz, le déflecteur externe expansible et le coussin de protection sont rattachés au module à l'aide d'un moyen de fixation commun. Préférentiellement, ce dernier est constitué par une tige filetée qui est fixée dans la paroi latérale du générateur et sur laquelle est rapporté un écrou.

On décrit ci-après aux figures 1 à 4 un exemple de réalisation d'un ensemble de protection selon l'invention et aux figures 5 à 8 des exemples de bande métallique utilisée pour fabriquer le déflecteur externe expansible.

La figure **1** est une vue schématique d'un ensemble de protection selon l'invention avant fonctionnement, vue d'une extrémité du générateur.

La figure **2** est une vue schématique partielle de l'ensemble de protection représenté à la figure 1, vue le long des génératrices du générateur.

La figure **3** est une vue schématique partielle de l'ensemble de protection représenté à la figure 1 mais en fonctionnement.

La figure **4** est une vue schématique partielle de l'ensemble de protection représenté à la figure 2 mais en fonctionnement.

La figure **5** est une vue de dessus de la bande métallique utilisée pour fabriquer un déflecteur externe expansible par pliage.

La figure **6** est une vue partielle en coupe longitudinale de la bande représentée à la figure 5 selon la première variante préférée de réalisation du déflecteur externe expansible.

La figure **7** est une vue partielle en coupe longitudinale de la bande représentée à la figure 5 selon la seconde variante préférée de réalisation du déflecteur externe expansible.

La figure **8** est une vue partielle de dessus de la bande métallique utilisée pour fabriquer un déflecteur externe expansible par enroulement sur elle-même.

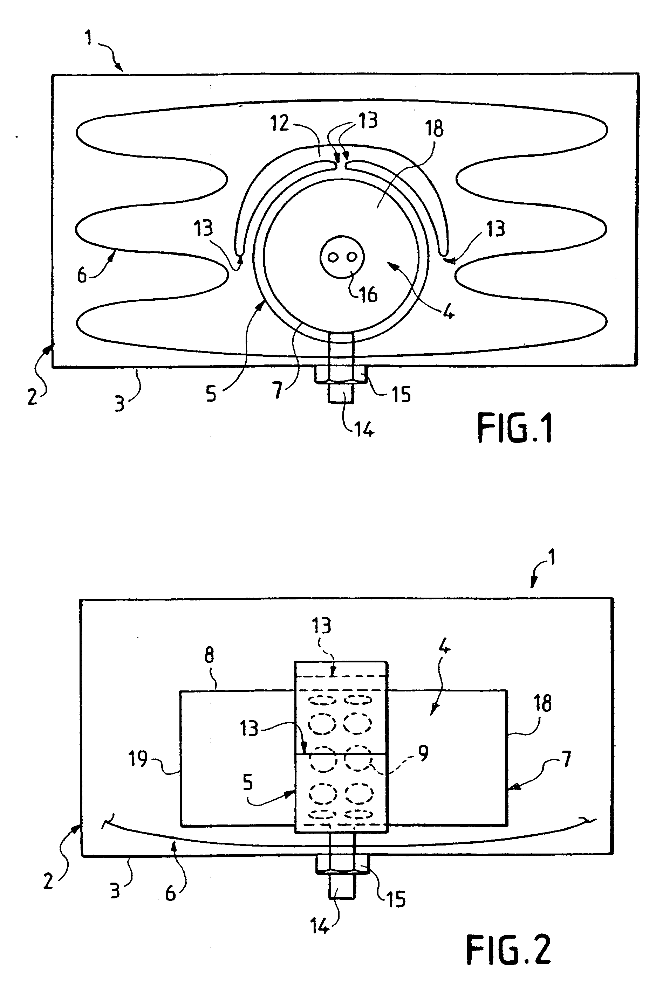

En se référant aux figures 1 et 2, on observe qu'un ensemble de protection 1 selon l'invention est constitué à partir d'un module 2 muni d'un fond 3 sur lequel est rattaché un sous-ensemble comprenant un générateur 4 de gaz, un déflecteur externe expansible 5 et un coussin de protection 6.

Plus précisément, le générateur 4 comprend un corps 7 de forme générale tubulaire présentant deux extrémités 18, 19 et une paroi latérale 8 dont le périmètre extérieur est égal à une valeur L. Cette paroi latérale 8 comporte dans une zone équidistante des extrémités 18,19, d'une part, des orifices d'évacuation 9 des gaz uniformément répartis sur la circonférence de ladite paroi latérale 8, et d'autre part, une tige filetée 14 présentant une extrémité fixée par soudure dans ladite paroi latérale 8. Le générateur 4 comporte par ailleurs un dispositif d'allumage 16 fixé dans l'extrémité 18 du corps 7.

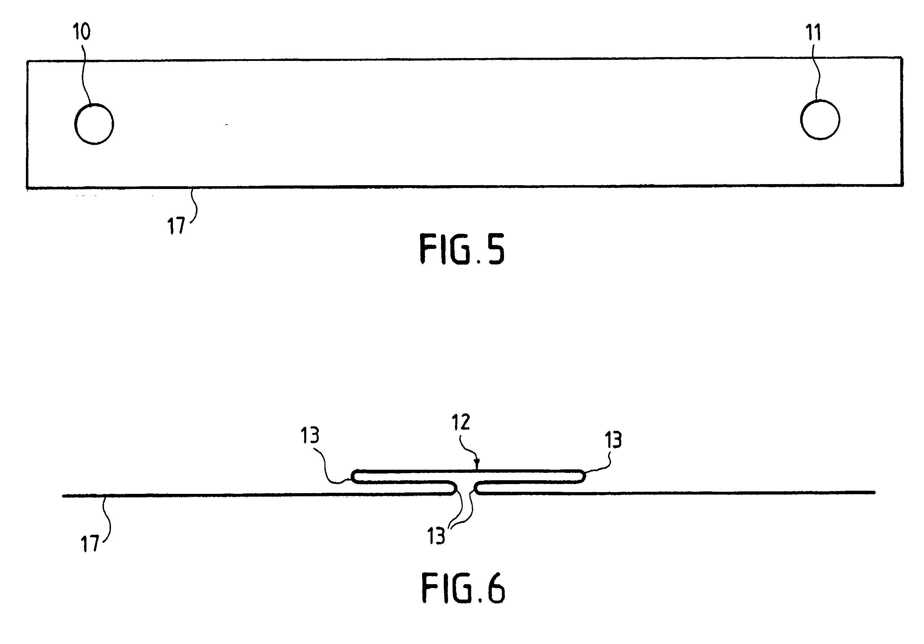

En se référant également aux figures 5 et 6, on observe que le déflecteur externe expansible 5 est réalisé à partir d'une bande 17 en fer-blanc ayant une longueur de valeur 2L et une épaisseur d'environ 0,25mm. Cette bande 17 porte une perforation circulaire 10 située à approximativement 5mm de la première extrémité de ladite bande 17 et une perforation circulaire 11 située également à approximativement 5mm de la seconde extrémité de ladite bande 17. Avant d'être positionnée autour du générateur 4, la bande 17 est tout d'abord pliée quatre fois de façon symétrique de manière à ce qu'une zone d'expansion 12 centrale soit formée, chacun des quatre plis 13 étant réalisé selon un angle de 180° et avec un rayon minimal de 0,2mm. La bande 17 est ensuite emboutie jusqu'à ce qu'elle possède une forme générale cylindrique et jusqu'à ce que les perforations circulaires 10 et 11 se superposent. Le déflecteur externe expansible 5 ainsi constitué est finalement ajusté au plus près du générateur 4 de façon à recouvrir totalement les orifices d'évacuation 9 et il est maintenu fermement dans cette position grâce aux perforations circulaires 10 et 11 superposées qui sont glissées le long de la tige filetée 14.

Le générateur 4 et le déflecteur externe expansible 5 ainsi réunis sont alors introduits dans le coussin de protection 6. Ce dernier, qui est connu de l'homme du métier, présente sur la face opposée à celle destinée à venir au contact de l'occupant des zones de fixation munie chacune d'un orifice. Chacune de ces zones de fixation est finalement glissée le long de la tige filetée 14 par l'orifice qu'elle porte.

Enfin, le sous-ensemble constitué par le générateur 4, le déflecteur externe expansible 5 et le coussin de protection 6 est rattaché au module 2 grâce à la tige filetée 14 qui est insérée dans un ajutage présenté par le fond 3 et sur laquelle est vissé un écrou 15.

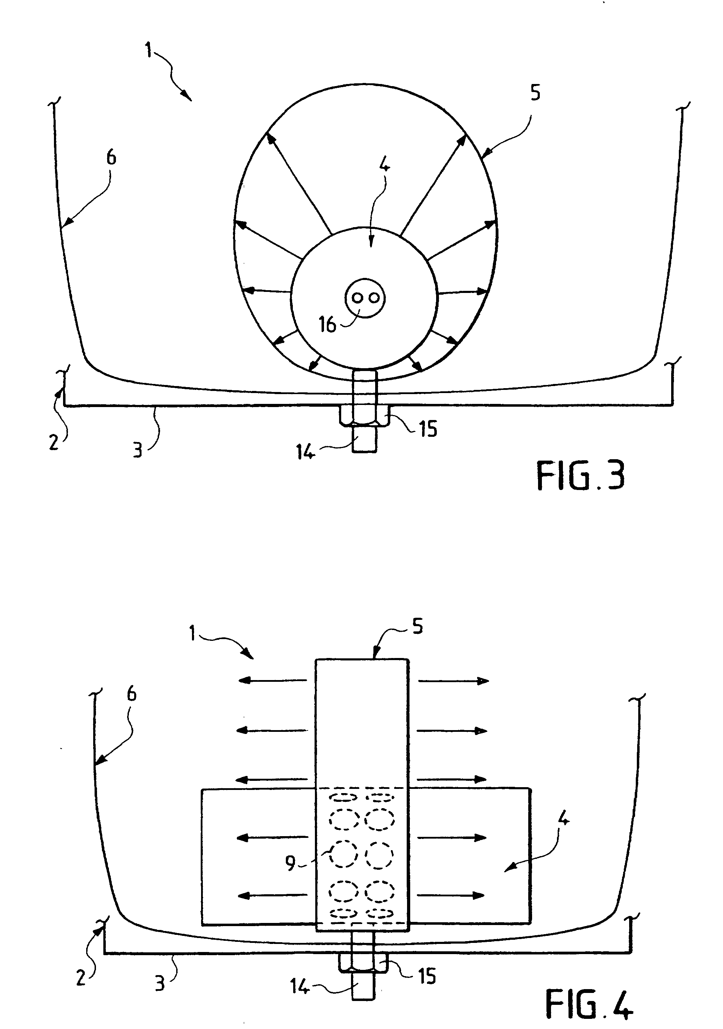

Comme représenté aux figures 3 et 4, le fonctionnement d'un tel ensemble de protection 1 est le suivant. Lors d'une collision nécessitant le déploiement du coussin de protection 6 afin de protéger efficacement l'occupant du véhicule automobile, un ordre de déclenchement est transmis au dispositif d'allumage 16 qui provoque par conséquent le fonctionnement du générateur 4. Celui-ci génère alors des gaz destinés à gonfler le coussin de protection 6 qui s'échappent par les orifices d'évacuation 9. Ces gaz exercent immédiatement une pression telle sur le déflecteur externe expansible 6, et notamment sur la zone d'expansion 12 centrale, qu'ils obligent celui-ci à se déployer totalement de façon à former un anneau dont le diamètre est nettement supérieur à celui de la paroi latérale 8 du corps 7. Les gaz issus du générateur 4 sont donc amenés, dans un premier temps, à venir au contact du déflecteur externe expansible 5 et, dans un deuxième temps, à gonfler le coussin de protection 6 de façon uniforme après réflexion sur ledit déflecteur externe expansible 5.

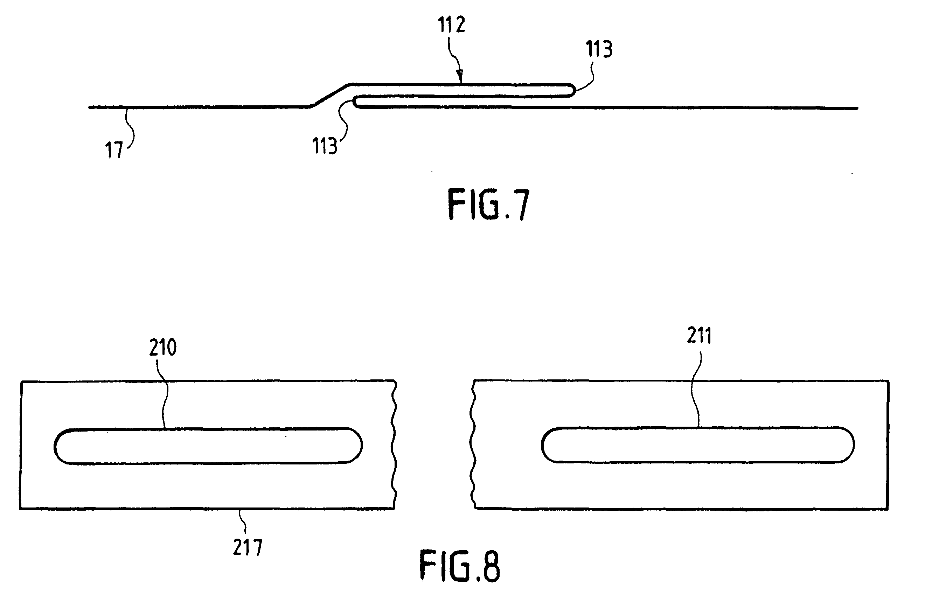

On a représenté, à la figure 7, une vue partielle en coupe longitudinale de la bande 17 selon la seconde variante préférée de réalisation d'un déflecteur externe expansible. La bande 17 est en fait pliée deux fois de façon asymétrique de manière à ce qu'une zone d'expansion 112 soit formée, chacun des deux plis 113 étant réalisé selon un angle de 180° et avec un rayon minimal de 0,2mm. En fonctionnement, le déflecteur externe expansible ainsi fabriqué se comporte de façon identique au déflecteur externe expansible 5 précédemment décrit.

On a représenté, à la figure 8, une bande 217 utilisable pour fabriquer un déflecteur externe expansible par simple enroulement de la bande 217 autour du générateur. Cette bande 217 présente la caractéristique de porter des perforations oblongues 210 et 211 de grande longueur qui sont destinées, sous l'action des gaz libérés par le générateur, à glisser sur la tige filetée et donc à permettre le déploiement du déflecteur externe expansible.

## Revendications

1. Ensemble de protection (1) d'un occupant d'un véhicule automobile comprenant un module (2) contenant lui-même un générateur (4) de gaz et un coussin (6) de protection initialement plié, destiné à être gonflé par les gaz du générateur (4), le générateur (4) de gaz comprenant un corps (7) de forme générale tubulaire qui présente deux extrémités (18, 19) et une paroi latérale (8) portant des orifices (9) d'évacuation répartis sur la circonférence de ladite paroi latérale, cette dernière présentant une section circulaire dont le périmètre extérieur est égal à une valeur L, **caractérisé en ce que** le coussin (6) de protection est initialement plié autour du générateur (4) de gaz, et le module (2) contient en outre un déflecteur externe (5) des gaz du générateur (4), le déflecteur externe (5) étant formé par un élément unique (17) expansible, qui est fixé au module (2) et qui enserre initialement la paroi latérale (8), de manière à ce que les orifices (9) d'évacuation soient recouverts par le déflecteur externe (5) et que, lorsque les gaz de gonflage du coussin (6) de protection s'échappent des orifices (9) d'évacuation du générateur (4), le déflecteur externe (5) soit déployé, sous la pression des gaz, autour de la paroi latérale (8) en un anneau (5) de contact avec les gaz et de réflexion des gaz pour le gonflage du coussin (6) de protection.

2. Ensemble de protection (1) selon la revendication 1, **caractérisé en ce que** le déflecteur externe expansible (5) est réalisé à l'aide d'une bande (17) métallique déformable ayant une longueur dont la valeur est comprise entre 1,5 L et 2,5 L.

3. Ensemble de protection (1) selon la revendication 2, **caractérisé en ce que** la bande (17) possède une épaisseur comprise entre 0,1 mm et 0,5 mm.

4. Ensemble de protection (1) selon l'une quelconque des revendications 2 ou 3, **caractérisé en ce que** la bande (17) déformable comporte au moins une zone d'expansion (12, 112) destinée à être déployée sous l'action des gaz libérés par le générateur (4).

5. Ensemble de protection (1) selon la revendication 4, **caractérisé en ce que** la zone d'expansion (12) est obtenue par pliage de la bande (17) selon au moins quatre plis (13) symétriques, chaque pli (13) étant réalisé selon un angle de 180°C et avec un rayon minimal de 0,2 mm.

6. Ensemble de protection (1) selon la revendication 4, **caractérisé en ce que** la zone d'expansion (112) est obtenue par pliage de la bande (17) selon au moins deux plis (113) asymétriques, chaque pli (113) étant réalisé selon un angle de 180° et avec un rayon minimal de 0,2 mm.

7. Ensemble de protection (1) selon l'une quelconque des revendications 2 à 6, **caractérisé en ce que** la bande (17) est revêtue d'une protection contre la corrosion.

8. Ensemble de protection (1) selon l'une quelconque des revendications précédentes, **caractérisé en ce que** les orifices d'évacuation (9) sont situés dans une zone équidistante des extrémités (18, 19) du corps (7).

9. Ensemble de protection (1) selon la revendication 8, **caractérisé en ce que** le générateur (4) de gaz, le déflecteur externe expansible (5) et le coussin de protection (6) sont rattachés au module (2) à l'aide d'un moyen de fixation commun.

10. Ensemble de protection (1) selon la revendication 9, **caractérisé en ce que** le moyen de fixation est constitué par une tige filetée (14) fixée dans la paroi latérale (8) et sur laquelle est rapporté un écrou (15).

## Patentansprüche

1. Einheit (1) zum Schutz eines Kraftfahrzeuginsassen, die ein Modul (2) umfaßt, das seinerseits einen Gasgenerator (4) und ein anfänglich zusammengelegtes Schutzkissen (6), das dazu bestimmt ist durch die Gase des Generators (4) aufgeblasen zu werden, enthält, wobei der Gasgenerator (4) ein allgemein röhrenförmiges Gehäuse (7) umfaßt, das zwei Enden (18, 19) und eine seitliche Wand (8), die über den Umfang dieser seitlichen Wand verteilte Auslaßöffnungen (9) trägt, aufweist, wobei die seitliche Wand eine kreisförmige Schnittfläche aufweist, deren äußerer Umfang gleich einem Wert L ist, **dadurch gekennzeichnet, daß** das Schutzkissen (6) anfänglich um den Gasgenerator (4) herum zusammengelegt ist und daß das Modul (2) unter anderem einen externen Deflektor (5) für die Gase des Generators (4) umfaßt, wobei der externe Deflektor (5) aus einem einzelnen expandierbaren Element (17) gebildet ist, das am Modul (2) befestigt ist und das anfänglich die seitliche Wand (8) derart umschließt, daß die Auslaßöffnungen (9) durch den externen Deflektor (5) bedeckt sind und daß, wenn die Gase zum Aufblasen des Schutzkissens (6) aus den Auslaßöffnungen (9) des Generators (4) entweichen, der externe Deflektor (5) sich unter dem Druck der Gase um die seitliche Wand (8) herum zu einem Ring (5) für den Kontakt mit den Gasen und die Reflektion der Gase zum Aufblasen des Schutzkissens (6) entfaltet.

2. Schutzeinheit (1) nach Anspruch 1, **dadurch gekennzeichnet, daß** der externe expandierbare Deflektor (5) mit Hilfe eines verformbaren Metallbands (17) ausgeführt ist, dessen Länge zwischen 1,5 L und 2,5 L liegt.

3. Schutzeinheit (1) nach Anspruch 2, **dadurch gekennzeichnet, daß** das Band (17) eine Dicke zwischen 0,1 mm und 0,5 mm hat.

4. Schutzeinheit (1) nach einem der Ansprüche 2 oder 3, **dadurch gekennzeichnet, daß** das verformbare Band (17) wenigstens einen Expansionsbereich (12, 112) umfaßt, der dazu bestimmt ist unter der Wirkung der durch den Generator (4) freigesetzten Gase entfaltet zu werden.

5. Schutzeinheit (1) nach Anspruch 4, **dadurch gekennzeichnet, daß** der Expansionsbereich (12) durch das Zusammenlegen des Bands (17) entlang von wenigstens vier symmetrischen Falten (13) ausgebildet wird, wobei jede Falte (13) mit einem Winkel von 180° und mit einem minimalen Radius von 0,2 mm ausgeführt ist.

6. Schutzeinheit (1) nach Anspruch 4, **dadurch gekennzeichnet, daß** der Expansionsbereich (112) durch das Zusammenlegen des Bands (17) entlang von wenigstens zwei asymmetrischen Falten (113) ausgebildet wird, wobei jede Falte (113) mit einem Winkel von 180° und mit einem minimalen Radius von 0,2 mm ausgeführt ist.

7. Schutzeinheit (1) nach einem der Ansprüche 2 bis 6, **dadurch gekennzeichnet, daß** das Band (17) mit einem Korrosionsschutz versehen ist.

8. Schutzeinheit (1) nach einem der vorhergehenden Ansprüche, **dadurch gekennzeichnet, daß** die Auslaßöffnungen (9) in einem Bereich angeordnet sind, der in gleichem Abstand zu den Enden (18,19) des Gehäuses (7) liegt.

9. Schutzeinheit (1) nach Anspruch 8, **dadurch gekennzeichnet, daß** der Gasgenerator (4), der externe expandierbare Deflektor (5) und das Schutzkissen (6) am Modul (2) mit einem gemeinsamen Befestigungsmittel befestigt sind.

10. Schutzeinheit (1) nach Anspruch 9, **dadurch gekennzeichnet, daß** das Befestigungsmittel durch eine mit einem Gewinde versehene Stange (14) gebildet wird, die an der seitlichen Wand (8) angebracht und auf der eine Mutter (15) montiert ist.

## Claims

1. A protective assembly (1) for protecting an occupant of a motor vehicle, the assembly comprising a module (2) itself containing a gas generator (4) and an initially-folded airbag (6) for being inflated by gas from the generator (4), the gas generator (4) comprising a generally tubular body (7) presenting two ends (18, 19) and a side wall (8) having discharge orifices (9) distributed around the circumference of said side wall, the side wall presenting a circular section with an outer perimeter of length equal to L, the assembly being **characterized in that** the airbag (6) is initially folded around the gas generator (4) and the module (2) further contains an outer deflector (5) for deflecting the gas from the generator (4), the outer deflector (5) being formed by a single expandable element (17) which is fixed to the module (2) and which initially fits closely round the side wall (8) so that the discharge orifices (9) are covered by the outer deflector (5) and so that when the gas for inflating the airbag (6) escapes through the discharge orifices (9) of the generator (4), the outer deflector (5) is deployed under the pressure of the gas around the side wall (8) to torm a ring (5) in contact with the gas for reflecting the gas to inflate the airbag (6).

2. A protective assembly (1) according to claim 1, **characterized in that** the expandable outer deflector (5) is made from a deformable metal strip (17) of length lying in the range 1.5 L to 2.5 L.

3. A protective assembly (1) according to claim 2, **characterized in that** the strip (17) is of thickness lying in the range 0.1 mm to 0.5 mm.

4. A protective assembly (1) according to claim 2 or claim 3, **characterized in that** the deformable strip (17) includes at least one expansion zone (12, 112) for being deployed under the action of the gas released by the generator (4).

5. A protective assembly (1) according to claim 4, **characterized in that** the expansion zone (12) is obtained by folding the strip (17) with at least four symmetrical folds (13), each fold (13) being made through an angle of 180° with a minimum radius of 0.2 mm.

6. A protective assembly (1) according to claim 4, **characterized in that** the expansion zone (112) is obtained by folding the strip (17) with at least two asymmetrical folds (113), each fold (113) being made through an angle of 180° with a minimum radius of 0.2 mm.

7. A protective assembly (1) according to any one of claims 2 to 6, **characterized in that** the strip (17) is coated in protection against corrosion.

8. A protective assembly (1) according to any preceding claim, **characterized in that** the discharge orifices (9) are situated in a zone that is equidistant from the ends (18, 19) of the body (7).

9. A protective assembly (1) according to claim 8, **characterized in that** the gas generator (4), the expandable outer deflector (5), and the airbag (6) are attached to the module (2) using common fixing means.

10. A protective assembly (1) according to claim 9, **characterized in that** the fixing means is constituted by a threaded rod (14) fixed in the side wall (8) and having a nut (15) fitted thereon.
